(19) Europäisches Patentamt
European Patent Office
Office européen des brevets

(11) **EP 3 613 003 B1**

(12) **FASCICULE DE BREVET EUROPEEN**

(45) Date de publication et mention
de la délivrance du brevet:
**24.04.2024 Bulletin 2024/17**

(21) Numéro de dépôt: **18722418.3**

(22) Date de dépôt: **20.04.2018**

(51) Classification Internationale des Brevets (IPC):
***G06Q 20/40*** *(2012.01)*

(52) Classification Coopérative des Brevets (CPC):
**G06Q 20/4016; G06Q 20/405**

(86) Numéro de dépôt international:
**PCT/EP2018/060174**

(87) Numéro de publication internationale:
**WO 2018/193085 (25.10.2018 Gazette 2018/43)**

(54) **SYSTÈME ET PROCÉDÉ POUR GÉRER LA DÉTECTION DE FRAUDES DANS UN SYSTÈME DE TRANSACTIONS FINANCIÈRES**

SYSTEM UND VERFAHREN ZUR BEWIRTSCHAFTUNG VON BETRUGSFEHLERN IN EINEM FINANZTRANSAKTIONSSYSTEM

SYSTEM AND METHOD FOR MANAGING DETECTION OF FRAUD IN A FINANCIAL TRANSACTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.04.2017 FR 1753504**

(43) Date de publication de la demande:
**26.02.2020 Bulletin 2020/09**

(73) Titulaire: **Worldline**
**92800 Puteaux (FR)**

(72) Inventeurs:
 • **CAELEN, Olivier**
   **1040 Etterbeek (BE)**
 • **GIANINI, Gabriele**
   **27100 Pavia (PV) (IT)**
 • **ERNESTO, Damiani**
   **29025 Piacenza (PC) (IT)**

(74) Mandataire: **IP Trust**
**2, rue de Clichy**
**75009 Paris (FR)**

(56) Documents cités:
 EP-A1- 3 343 422          WO-A1-2015/144220
 WO-A2-01/18755            US-A1- 2004 034 604
 US-A1- 2008 172 316       US-A1- 2011 276 489

 • GRECO SALVATORE ET AL: "Evaluating Importance of Conditions in the Set of Discovered Rules", 14 May 2007 (2007-05-14), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 314 - 321, XP047402366, ISBN: 978-3-540-74549-5

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE DE L'INVENTION

La présente invention se rapporte au domaine des transactions financières et plus précisément à la gestion des règles utilisées pour détecter une fraude au cours desdites transactions.

ARRIÈRE-PLAN TECHNOLOGIQUE DE L'INVENTION

Dans le domaine des transactions financières, un système de détection de fraude est déclenché, par exemple, par l'utilisation d'un processus de paiement par carte de crédit. Le système de détection de fraude est en général basé sur un vaste ensemble de règles fonctionnant ensemble. Chaque règle analyse indépendamment chaque nouvelle transaction et si au moins une règle détecte un risque de fraude, alors le système de détection de fraude entier produit une alerte pour cette transaction.

Pour un tel système de détection, il est souvent nécessaire de faire une gouvernance de l'ensemble de règles. Par gouvernance, nous entendons « gérer l'ensemble de règles pour maintenir l'ensemble aussi exact et efficace que possible en ajoutant, supprimant ou modifiant des règles dans l'ensemble ». La gouvernance, en raison de la grande quantité de règles, n'est pas une tâche facile. En général, ladite gouvernance est basée sur l'analyse de rapports générés pendant les processus de détection de fraudes. Les rapports contiennent, pour chaque règle, des mesures de performance. Ces mesures sont, par exemple, la « précision », les « sauvegardes », le « nombre d'alertes », etc.

Le document US 2011/276489 A1 divulgue un système de contrôle de transactions pour la détection et le signalement de fraude, comprenant une base de données contenant les informations sur les transactions, configuré pour déclencher au moins une alarme sur la base des règles en cas de détection de fraude, ainsi que de bloquer automatiquement la transaction et/ou une carte utilisée par un utilisateur pour la transaction en réponse audit déclenchement d'alarme.

Toutefois, toutes ces mesures de performance sont locales (elles sont spécifiques pour chaque règle) et ne mesurent pas la contribution des règles à la performance globale du système entier. Cette situation peut conduire à la suppression de règles qui montrent une faible performance locale mais contribuent à la performance globale du système entier, et par conséquent augmente le risque que certaines fraudes puissent ne pas être détectées par le système de détection.

DESCRIPTION GENERALE DE L'INVENTION

La présente invention a pour but de pallier certains inconvénients de l'art antérieur en proposant un moyen pour gérer de façon efficace les règles d'un système de détection de fraude.

Ce but est atteint par un système selon la revendication 1. D'autres caractéristiques du système sont définies dans les revendications dépendantes 2-9.

Un autre but de la présente invention est de fournir un procédé pour contrôler les transactions financières.

Ce but est atteint par un procédé selon la revendication 10. D'autres caractéristiques du procédé sont définies dans les revendications dépendantes 11-14.

DESCRIPTION DES FIGURES ILLUSTRATIVES

D'autres caractéristiques et avantages de la présente invention apparaîtront plus clairement à la lecture de la description ci-après, faite en référence aux dessins annexés, dans lesquels :

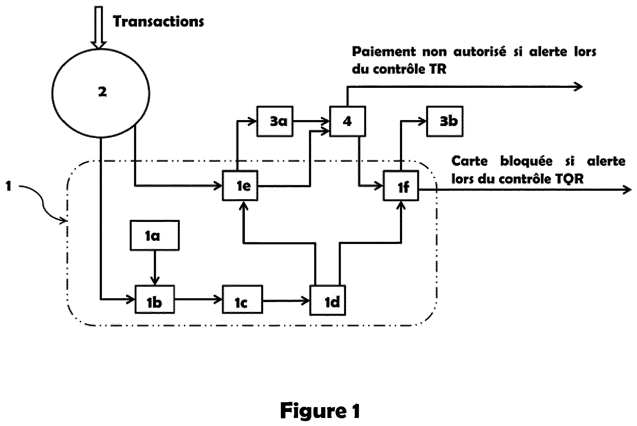

- la figure 1 est une représentation schématique du dispositif de détection de fraude du système de gestion de transactions financières, selon un mode de réalisation.

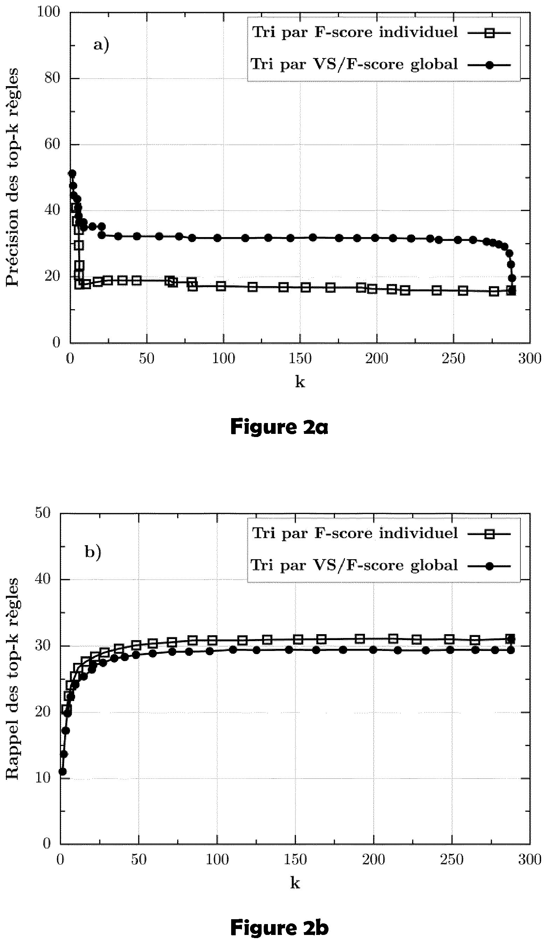

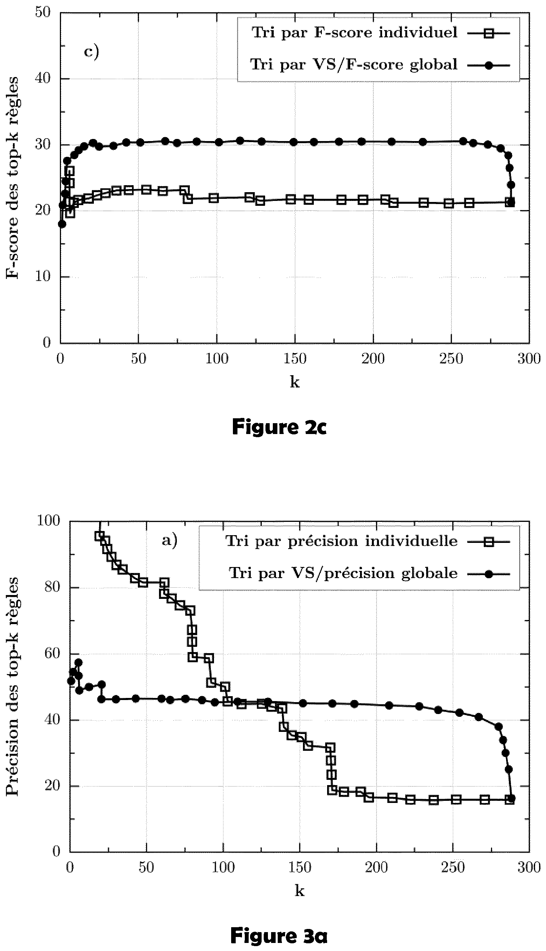

- les figures 2a, 2b et 2c représentent les courbes de performance de classifieurs de top-k règles agrégées, obtenues avec les critères du F-score individuel (ligne avec des carrés) et de la valeur de Shapley (VS) relativement au F-score de l'ensemble de règles (ligne avec des points noirs), respectivement pour la précision, le rappel et le F-score, selon un mode de réalisation.

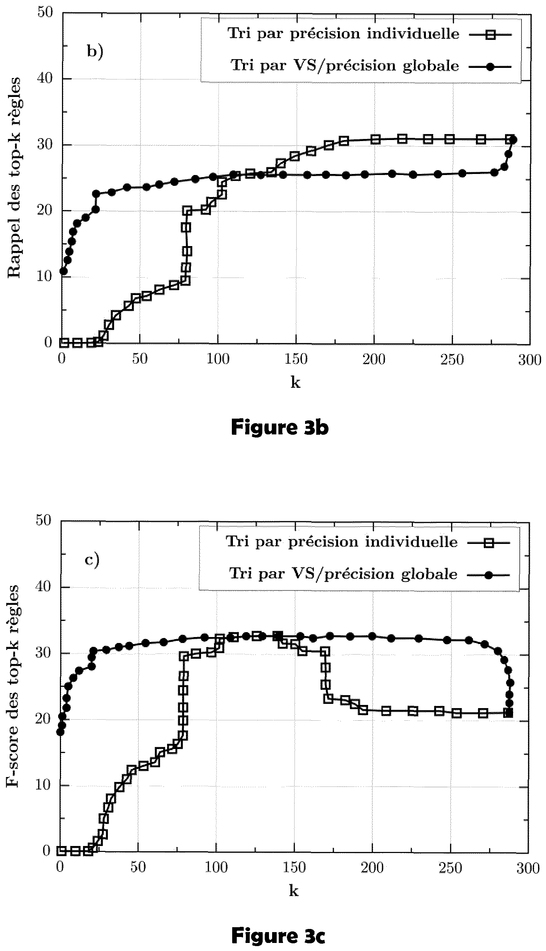

- les figures 3a, 3b et 3c représentent les courbes de performance de classifieurs de top-k règles agrégées, obtenues avec les critères de précision individuelle (ligne avec des carrés) et de la valeur de Shapley (VS) relativement à la précision de l'ensemble de règles (ligne avec des points noirs), respectivement pour la précision, le rappel et le F-score, selon un mode de réalisation.

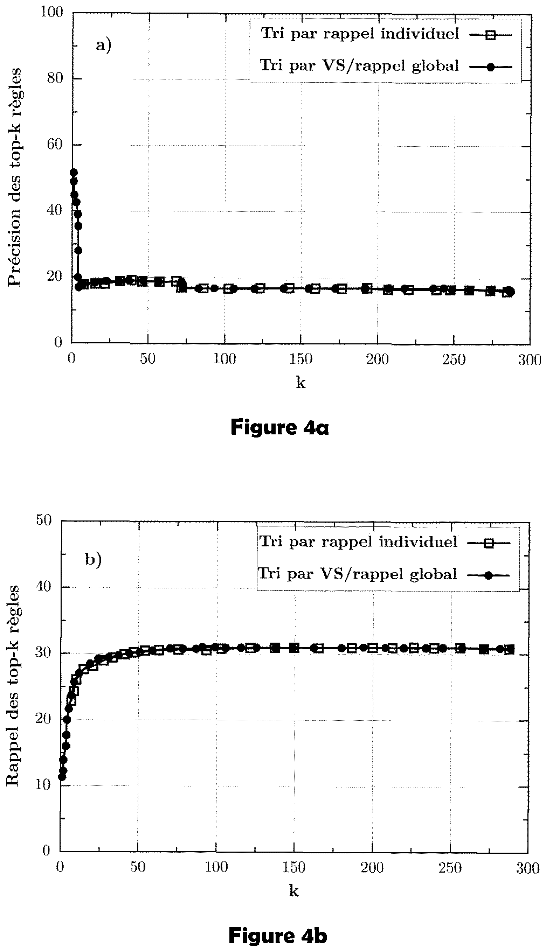

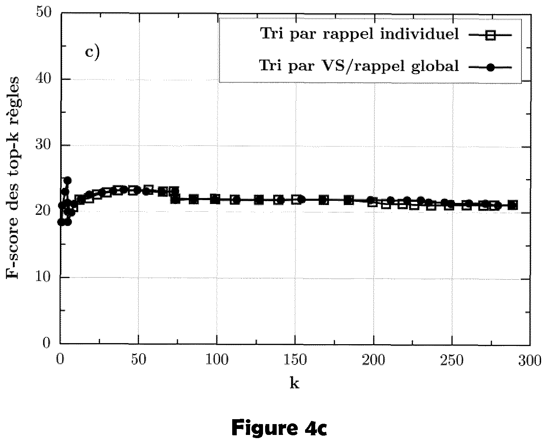

- les figures 4a, 4b et 4c représentent les courbes de performance de classifieurs de top-k règles agrégées, obtenues avec les critères de rappel individuel (ligne avec des carrés) et de la valeur de Shapley (VS) relativement au rappel de l'ensemble de règles (ligne avec des points noirs), respectivement pour la précision, le rappel et le F-score, selon un mode de réalisation.

DESCRIPTION DES MODES DE REALISATION PREFERES DE L'INVENTION

La présente invention concerne un système pour gérer des transactions financières.

Le système pour gérer des transactions financières comprend au moins une base de données (2) contenant les informations sur les transactions, au moins un dispositif de détection de fraude (1, Figure 1) comprenant un module d'évaluation de règles (1b), un module de sélection de règles (1c), lesdits modules étant connectés et chaque module étant un code exécutable sur un ordinateur, au moins une première mémoire (1a) pour stocker un ensemble de règles pour détecter des fraudes lors de chaque transaction connectée au module d'évaluation de règles (1b), ledit système étant caractérisé en ce que le module d'évaluation de règles (1b) permet de calculer une estimation de la contribution de chaque règle de l'ensemble de règles relativement à un paramètre représentant la performance globale de l'ensemble de règles stocké dans la première mémoire (1a) du dispositif de détection (1), cette estimation de contribution étant sauvegardée dans un fichier de rapport d'évaluation, et ledit fichier de rapport et lesdites règles évaluées étant transférés dans le module de sélection de règles (1c), ledit module de sélection (1c) analysant le rapport pour sélectionner un sous-ensemble de règles parmi les règles évaluées de l'ensemble de règles, lesdites règles sélectionnées étant stockées dans une seconde mémoire (1d) du dispositif de détection de fraude (1) devant être utilisé pour le contrôle des transactions.

Le dispositif de détection de fraude (1) est déclenché, par exemple, par un processus de paiement par carte de crédit. En correspondance avec une tentative de paiement par carte, le processus de détection de fraude par carte de crédit peut être activé dans deux situations : avant que l'autorisation pour le paiement ne soit donnée et après l'autorisation. Dans le premier cas, on parle de contexte de détection de fraude en temps réel (TR), dans le second cas de contexte en temps quasi réel (TQR).

Le dispositif de détection de fraude comprend un module de détection de fraude en temps réel (TR) (1e, Figure 1) pour le contrôle des transactions avant l'autorisation pour le paiement et un module de détection de fraude en temps quasi réel (TQR) (1f, Figure 1) pour le contrôle desdites transactions après l'autorisation, chacun desdits modules étant connecté à la seconde mémoire (1d) du dispositif de détection de fraude.

En effectuant la détection de fraude avant l'autorisation, on a la possibilité de bloquer un paiement frauduleux avant qu'il soit accepté. Pour permettre une utilisation efficace de détection de fraude TR, le système doit être : 1) rapide (la détection de fraude TR doit généralement être effectuée en environ 200 ms) et 2) précis (un faux positif implique que l'on refuse une transaction légitime, provoquant ainsi une gêne pour le client).

Les règles utilisées par le module de détection de fraude TR (1e) sont généralement des règles « si-alors (-sinon) » conçues par les investigateurs humains pour bloquer des demandes de paiement qui sont clairement des tentatives de fraude. En raison de la contrainte de vitesse, ces règles utilisent principalement des informations qui sont disponibles au moment de la demande de transaction et font peu usage de profils de titulaire de carte stockés dans la base de données (2) du système de transactions financières de gestion. Dans la pratique, plusieurs règles TR sont exécutées simultanément, et une transaction déclenchant l'une quelconque de ces règles est refusée, c.-à-d. les règles sont agrégées avec un « opérateur OU ». Par exemple, une condition pour contrôler s'il y a une fraude peut être « si la règle 1 ou la règle 2 ou... n'est pas vérifiée alors arrêter l'autorisation pour le paiement ». La carte associée à une transaction prétendument frauduleuse est également bloquée automatiquement pour éviter de futures fraudes. Toutes les transactions passant le module de détection de fraude TR (1e) sans alerte sont autorisées.

Toutefois, l'activité de détection de fraude se poursuit au-delà de ce point : toutes les transactions autorisées sont en outre analysées par le module de détection de fraude TQR (1f). Dans le contexte TQR, certaines des contraintes plus fortes peuvent être assouplies. Comme la transaction est déjà acceptée, le dispositif de détection de la fraude (1) se voit accorder plus de temps pour prendre une décision (généralement environ 1 minute). Le dispositif (1) peut enrichir les données de transaction avec d'autres caractéristiques et mettre en correspondance la transaction en cours avec les achats précédents et le profil du titulaire de carte. Celles-ci peuvent inclure, des caractéristiques simples, comme les dépenses moyennes ou le nombre moyen de transactions dans la même journée. Toutes ces caractéristiques agrégées ont le potentiel d'être informatives dans l'objectif de déterminer si une transaction est frauduleuse ou non.

Les règles basées sur les caractéristiques dans le contexte TQR peuvent encore être des règles simples « si-alors (-sinon) » conçues par des investigateurs humains. Toutefois, elles peuvent également être basées sur des techniques d'apprentissage automatique (machine learning) avancées. Les règles TQR sont exécutées simultanément, et toute transaction déclenchant au moins une de ces règles TQR produit une alerte (elles sont agrégées dans l'« opérateur OU »), certaines règles peuvent également bloquer la carte de paiement du titulaire de carte.

Tout retour d'informations des investigateurs est utilisé par le système 1) pour reformer automatiquement les modèles d'apprentissage automatique (machine learning), si nécessaire, et 2) pour générer des rapports orientés gouvernance : ces rapports peuvent être utilisés par les investigateurs pour gérer l'ensemble de règles.

Comme mentionné ci-dessus, il existe deux principaux types de règles, des règles guidées par des experts qui sont des règles simples « si-alors (-sinon) » et des règles guidées par des données, obtenues par des techniques d'apprentissage automatique appliquées sur des ensembles de données historiques. Les deux types de règles peuvent être exécutés en temps quasi réel (TQR). L'ensemble de règles de détection de fraude peut contenir des centaines de règles, ainsi la gouvernance est une composante importante du processus de détection de fraude. Sur la base des rapports d'évaluation, les investigateurs peuvent décider de modifier/supprimer une règle existante ou d'ajouter une nouvelle règle dans la production afin de couvrir un nouveau scénario de fraude.

Dans certains modes de réalisation, le fichier de rapport d'évaluation généré par le module d'évaluation de règles (1b) contient chaque paramètre représentant la contribution de chaque règle, incluse dans la première mémoire (1a) du dispositif de détection (1), à la performance globale de l'ensemble de règles de ladite première mémoire (1a).

Le module de sélection de règles (1c) comprend au moins un agencement pour analyser automatiquement le fichier de rapport d'évaluation transmis par le module d'évaluation de règles (1b). Le fichier de rapport d'évaluation peut également être analysé manuellement par un expert en détection de fraude au moyen d'une interface interactive ou d'une IHM (interface homme-machine). Le module de sélection (1c) comprend également un agencement pour sélectionner automatiquement un sous-ensemble de règles en fonction d'au moins un critère lié au nombre de règles qu'un investigateur ou expert en détection de fraude souhaite conserver dans la seconde mémoire (1d), ladite sélection étant basée sur la valeur de Shapley (VS) de chaque règle relativement à une mesure ou métrique de performance donnée, pour le contrôle de chaque transaction financière. La sélection de règles peut également être réalisée par l'investigateur ou l'expert en détection de fraude au moyen de l'interface interactive ou de l'IHM (interface homme-machine).

Dans le rapport d'évaluation, chaque ligne correspond à une règle et chaque colonne correspond à des informations sur les règles. Ce rapport est utilisé par les experts ou investigateurs en détection de fraude pour faire la gouvernance (modifier, ajouter ou supprimer des règles) de l'ensemble de règles. En général, ce rapport donne uniquement une mesure de précision individuelle (locale) des règles. Dans la présente invention, une nouvelle colonne contenant les valeurs de Shapley (VS) est ajoutée. Par exemple, cette nouvelle colonne pourrait être utilisée, par l'équipe de détection de fraude, pour les tâches suivantes (qui sont difficiles à réaliser sans l'évaluation desdites valeurs de Shapley) :

- Identifier rapidement les règles avec beaucoup de chevauchement. Ce sont les règles avec une bonne performance locale mais des valeurs de Shapley faibles.
- Sélectionner rapidement un petit sous-ensemble de règles efficaces pour un nouveau client.

La valeur de Shapley (VS) peut être vue comme une nouvelle mesure de performance mais, contrairement aux autres mesures (par exemple la précision, ou la vitesse de détection), ladite valeur de Shapley n'est pas locale et dit combien la règle contribue à la performance globale de l'ensemble de règles entier.

Le module de sélection de règles (1c) génère également un fichier de rapport de sélection transmis à la seconde mémoire (1d) du dispositif de détection (1), ledit rapport contenant une liste du sous-ensemble de règles sélectionné, chaque règle dudit sous-ensemble ayant une valeur de Shapley (VS) au-dessus d'un seuil de valeur de Shapley déterminé, pour le contrôle des transactions financières et le code représentant les actions à entreprendre concernant les règles non sélectionnées encore mémorisées dans la première mémoire (1a).

Les actions à entreprendre comprennent au moins l'une des fonctionnalités suivantes : remplacer et/ou modifier et/ou supprimer les règles non sélectionnées de la première mémoire (1a) du dispositif de détection (1).

Dans certains modes de réalisation, les informations financières transmises lors de chaque transaction par un dispositif de paiement d'une entité émettrice (par exemple et sans limitation l'entité émettrice peut être une banque) utilisé par un titulaire de carte, sont transférées de la base de données (2) au dispositif de détection (1), lesdites informations étant contrôlées par les règles sélectionnées de la seconde mémoire (1d) dudit dispositif de détection (1c).

Les informations financières peuvent concerner directement la transaction, c.-à-d. des informations telles que, par exemple, le montant, la date, l'heure et/ou le pays où se déroule la transaction. Les informations financières peuvent également contenir des informations additionnelles telles que le sexe du titulaire de carte, l'âge, etc.

Les règles stockées dans la seconde mémoire (1d) du dispositif de détection (1) permettent à un système de transaction financière de gestion de générer une alerte lorsqu'une fraude est détectée au cours d'une transaction. Le système de transactions financières de gestion comprend au moins une première alarme (3a) et une seconde alarme (3b) pour produire une alerte lorsqu'au moins une des règles sélectionnées, stockées dans la seconde mémoire (1d) du dispositif de détection de fraude (1), est violée par les informations financières transmises par le dispositif de paiement au cours d'une transaction. En général, il existe deux types de règles utilisés pour contrôler les transactions : des règles pilotées par des données et des règles pilotées par des experts. Le premier type de règles est basé, par exemple et sans limitation, sur des techniques d'apprentissage automatique. Dans ce cas, un modèle d'apprentissage automatique (par exemple un modèle de forêt aléatoire, un réseau neuronal, etc.) retourne un score et un seuil est utilisé pour décider si une alerte doit être générée lorsqu'au moins une des règles est violée. Le second type de règles, les règles pilotées par des experts, essaie de détecter un scénario de fraude spécifique. Les scénarios sont identifiés par l'expert en détection de fraude. Par exemple et sans limitation, si une transaction est effectuée dans un pays donné et, dans les deux semaines suivantes, une autre transaction est effectuée pour plus d'un montant donné dans un autre pays donné, alors il y a un risque élevé de fraude. Ce type de scénario est identifié dans une règle pilotée par des experts. Dans ce cas, il n'y a pas d'utilisation de valeur de seuil. Le scénario est détecté ou non. Le système de gestion de transactions financières comprend également au moins un module d'autorisation (4), connecté à la première alarme (3a), afin de délivrer ou non une autorisation pour le paiement selon qu'une alerte est émise ou non pendant le contrôle TR de la transaction par le module de détection de fraude TR (1e), un écran et un module à code exécutable par ordinateur pour préparer un affichage d'au moins les rapports d'évaluation et de sélection des règles de détection de fraude et/ou pour afficher un message d'alerte lorsqu'une fraude a été détectée lors d'une transaction pour permettre à un opérateur d'arrêter la transaction ou de la figer jusqu'à vérification. En effet, toutes les alertes générées par le dispositif de détection de fraude (1) sont soumises à l'attention d'investigateurs humains, experts en détection de fraude. Ils estiment avec un degré de confiance élevé si une alerte est un vrai positif ou un faux positif. Par vrai positif (VP), nous voulons dire une alerte qui est émise lorsqu'une transaction frauduleuse existe réellement et par faux positif (FP), une alerte émise, lorsqu'une transaction frauduleuse n'existe pas réellement. Si une alerte était un faux positif et bloquait la carte, l'investigateur peut la débloquer.

Dans certains modes de réalisation, le module de détection de fraude TR (1e) est connecté à la première alarme (3a) et au module d'autorisation (4) du système de gestion, et le module de détection de fraude TQR (1f) est connecté à la seconde alarme (3b) et audit module d'autorisation (4), lesdites alarmes (3a, 3b) produisant ou non une alerte lorsqu'une fraude est détectée ou non au moins dans l'un desdits modules (1e, 1f) pendant le contrôle d'une transaction et ledit module d'autorisation (4) délivrant une autorisation pour le paiement selon qu'une alerte est émise ou non pendant le contrôle TR.

Le module de détection de fraude TR (1e) peut être connecté au module de détection TQR (1f) au moyen du module d'autorisation (4) afin de transmettre les données autorisées pour une autre vérification par ledit module de détection de fraude TQR (1f) avant de procéder au paiement. Si la seconde alarme (3b) émet une alerte pendant le contrôle TQR, la carte de paiement du titulaire de carte est bloquée par ledit module de détection de fraude TQR (1f).

La présente invention concerne également un procédé pour gérer des transactions financières.

Le procédé pour gérer des transactions financières dans un système financier contient au moins une base de données (2) pour stocker un ensemble de données lié à des transactions et/ou des informations concernant la détection de fraudes, au moins une mémoire (1a, 1d) pour stocker un ensemble de règles utilisé pour la détection de fraudes au cours d'une transaction, un moyen informatique comprenant au moins une mémoire pour le stockage d'au moins un algorithme, au moins un processeur pour l'exécution dudit algorithme afin de mettre en oeuvre ledit procédé comprenant les étapes :

- d'évaluation de la performance de chaque règle de l'ensemble de règles ;
- de sélection d'un sous-ensemble pertinent de règles parmi l'ensemble de règles évalué pour le contrôle de chaque transaction ;
- de remplacement et/ou modification et/ou suppression des règles non sélectionnées de la mémoire du système de transaction ;

ledit procédé étant caractérisé en ce que l'évaluation de la performance d'une règle est basée sur une estimation de sa contribution relativement à la performance globale de l'ensemble des règles utilisé pour contrôler une transaction donnée.

Dans l'approche standard d'évaluation de la performance de l'ensemble de règles, les règles sont appréciées individuellement, c.-à-d. isolément, indépendamment de la performance des autres règles dans l'ensemble de règles. Nous qualifions cette approche d'« approche orientée règle individuelle ». Dans cette approche on classe généralement les règles selon leur performance, mesurée isolément et on prend des décisions de suppression/mise à jour/insertion en conséquence. Par exemple, des règles de rang faible sont susceptibles d'être supprimées, des règles de rang élevé, sont préservées si elles sont déjà dans l'ensemble de règles, sinon elles sont insérées sur l'ensemble de règles.

Cette approche suppose implicitement que le meilleur ensemble de règles est obtenu par une optimisation de règle individuelle. Toutefois, ce n'est souvent pas le cas. Une performance de niveau individuel et une performance de niveau d'ensemble sont effectivement corrélées, mais des performances de règle individuelle n'équivalent pas à une performance de niveau d'ensemble, parce qu'une règle peut être redondante par rapport à une autre règle ou un ensemble d'autres règles. Par performance de niveau d'ensemble, nous voulons dire la performance de l'ensemble de règles entier.

Le fait que les règles qui sont individuellement les meilleures n'équivalent pas au meilleur ensemble de règles est intrinsèquement lié à une propriété fondamentale du système : la non-additivité des contributions aux différentes mesures ou métriques de performance, plus précisément, dans ce cas, la sous-additivité.

De plus, à la fois « des mesures de performance locale » et « des mesures de la contribution à la performance globale » peuvent donner une conclusion opposée. Par exemple et sans limitation, une règle peut avoir une bonne « mesure de performance locale » mais, en même temps, contribue très peu à la performance globale. Cela arrive, par exemple, lorsqu'une règle effectue beaucoup de « détections vraies » mais toutes ces détections vraies sont également détectées par d'autres règles. A l'inverse, une règle peut avoir une mauvaise « mesure de performance locale » mais, en même temps, contribue beaucoup à la performance globale.

Cela arrive, par exemple, lorsque la règle effectue peu de détections, mais c'est la seule règle qui détecte ces cas.

Dans certains modes de réalisation, l'évaluation de la contribution de chaque règle à la performance globale de l'ensemble de règles comprend la construction d'une pluralité de sous-ensembles de règles, au moyen d'un algorithme d'échantillonnage permettant un échantillonnage aléatoire, de l'ensemble de règles entier stocké dans la mémoire du système financier. L'estimation de la contribution de chaque règle, à la performance globale de l'ensemble de règles entier, comprend le calcul d'une valeur de Shapley de ladite règle donnée par une moyenne, sur la pluralité de sous-ensembles de règles construite, d'une « contribution marginale » de ladite règle à la performance de chacun des sous-ensembles de règles relativement à une mesure de performance donnée. L'algorithme pour estimer la valeur de Shapley d'une règle donnée peut se résumer comme suit : par exemple et sans limitation, si une mémoire du système de gestion comprend un ensemble, désigné $R$, de $N_R$ règles pour contrôler les transactions financières, ledit ensemble peut être écrit comme $R = \{i\}_{i=1,N_R} = \{1, ..., i, ...,N_R\}$ avec $i$ l'indice d'une règle incluse dans l'ensemble $R$ de règles. Le nombre d'ordonnancements ou de permutations, $\pi_j$, qui peut être effectué sur l'ensemble $R$ de règles, est donné par $N_R!$, avec $j = 1, N_R!$. Par exemple, si l'ensemble de règles R contient $N_R = 3$ règles alors $R = \{1,2,3\}$. Le nombre d'ordonnancements ou de permutations est 3! qui est égal à 6 : (1,2,3), (1,3,2), (2,1,3), (2,3,1), (3,2,1), (3,1,2). La permutation $\pi_1$ correspondant, par exemple, à l'ordonnancement (1,3,2) est la fonction qui transforme l'ensemble $R = \{1,2,3\}$ en un ensemble $R_{\pi_1} = \{1,3,2\}$. La construction de l'ensemble de la pluralité de sous-ensembles de règles consiste d'abord, par exemple et de préférence, à choisir aléatoirement un nombre $N_\theta$ d'ordonnancements ou de permutations, avec $N_\theta \ll N_R!$, parmi le nombre total $N_R!$ d'ordonnancements. Dans notre exemple, les permutations choisies peuvent être, par exemple, $\{(1,3,2), (3,1,2)\}$, ainsi $N_\theta = 2$.

Pour chaque ordonnancement ou permutation, $\pi$, de l'ensemble de $N_\theta$ ordonnancement et pour chaque règle $i$ de l'ensemble de règles $R$ stocké dans une mémoire du système de transactions financières de gestion, on construit une pluralité de sous-ensembles de règles contenant les règles précédant la règle $i$. Dans notre exemple, pour la permutation $\pi_1$ correspondant à l'ordonnancement (1,3,2) par exemple, un sous-ensemble de règles précédant la règle "2" est $\{1,3\}$.

Si nous désignons par $C_i^\pi$ un sous-ensemble de règles, également appelé « coalition », précédant la règle $i$, alors étant donné une mesure $\mu$ de la performance d'une règle donnée, $\mu$ étant par exemple la « précision » ou « le nombre de fraudes détectées en une minute » de ladite règle, la valeur de Shapley $v_i^\mu$, relativement à ladite mesure, de la règle $i$ incluse dans l'ensemble de règles R stocké dans le système de gestion, est estimée par la relation

$$v_i^\mu = \frac{1}{N_\theta!} \sum_\pi [\mu(C_i^\pi \cup \{i\}) - \mu(C_i^\pi)]$$

La relation "$C_i^\pi \cup \{i\}$" correspond à l'ensemble de règles formé par l'association du sous-ensemble ou coalition $C_i^\pi$ et de la règle $i$, l'opérateur "∪" étant l'opérateur d'union. La différence dans la somme, appelée « contribution marginale », correspond à la valeur ajoutée de la contribution de la règle $i$ au sous-ensemble ou coalition $C_i^\pi$.

La valeur de Shapley de règle $i$, qui est une moyenne pondérée de toute la « contribution marginale » à la règle $i$ sur tous les sous-ensembles ou coalitions, est ainsi une mesure de la performance de ladite règle par rapport à la mesure de performance de toutes les règles étant donné qu'elle prend en compte la contribution des autres règles incluses dans l'ensemble de règles R stocké dans la mémoire du système de gestion.

Dans le processus de calcul de la performance d'une règle donnée de l'ensemble de règles, il est important de classifier les informations transmises par un utilisateur au cours d'une transaction en les associant à une étiquette ou un attribut. Pour la classification des informations, on peut d'abord définir les expressions suivantes : une instance, une classe « vrai », une classe « faux », une classe « positif » et une classe « négatif ».

Par « instance », nous entendons les informations contrôlées, au cours d'une transaction, par le système de gestion. La classe « positif » correspond au cas où le système de gestion a fait le choix de produire une alerte pendant le contrôle des informations et la classe « négatif » correspond au cas où ledit système de gestion a fait le choix de ne pas produire d'alerte. La classe « vrai » correspond au cas où le choix fait par le système de gestion était bon et la classe « faux » correspond au cas où ledit choix n'était pas bon.

Par classifieur, nous voulons dire une règle ou un ensemble de règles utilisé pour contrôler la transaction.

Par conséquent, étant donné un ensemble d'instances, stocké dans la base de données du système financier de gestion, qui appartient à la classe vrai ou à la classe faux et un classifieur qui assigne aux instances soit la classe positif soit la classe négatif, on peut introduire les termes suivants :

- un vrai positif (VP) est une instance classifiée comme positive qui appartient à la classe vrai ;
- un vrai négatif (VN) est une instance classifiée comme négative qui appartient à la classe faux ;

- un faux positif (FP) est une instance classifiée comme positive qui appartient à la classe faux ;
- un faux négatif (FN) est une instance classifiée comme négative qui appartient à la classe vrai.

Ainsi, étant donné un ensemble d'instances avec leurs labels de classe et avec l'étiquette ou l'attribut de classifieur, on peut compter la cardinalité ou le nombre total d'événements (par exemple, lorsqu'une fraude est détectée ou non) dans chacune des quatre catégories définies ci-dessus (VP, VN, FP et FN).

Le cardinal ou nombre de vrais positifs est désigné $N_{VP}$, le nombre de vrais négatifs par $N_{VN}$, le nombre de faux positifs par $N_{FP}$ et le nombre de faux négatifs par $N_{FN}$.

Le nombre total d'instances étiquetées positivement (ou informations), désignées par $N_P$, est donné par $N_P = N_{VP} + N_{FP}$ et le nombre total d'instances de la classe vrai, désignées par $N_V$, est donné par $N_V = N_{VP} + N_{FN}$.

A partir des définitions données ci-dessus, on peut évaluer la performance d'un classifieur (une règle ou un ensemble de règles). Une mesure $\mu$ ou métrique utilisée pour évaluer la performance d'un classifieur sur un ensemble de données, est de préférence, la précision $p$ ou le rappel $r$ ou le F-score $f$ dudit classifieur :

- la précision $p$ d'une règle ou d'un ensemble de règles (ou un classifieur) sur un ensemble de données est définie par $p = N_{VP}/N_P$;
- le rappel $r$ de ladite règle ou dudit ensemble de règles sur l'ensemble de données est défini par $r = N_{VP}/N_V$;
- le F-score $f$ de ladite règle ou dudit ensemble de règles sur l'ensemble de données est défini par la moyenne harmonique de la précision et du rappel $1// =1/p+1/r$, c.-à-d. $f = 2pr/(p + r)$.

Par construction, on peut observer que la précision, le rappel et le F-score prennent des valeurs dans l'intervalle [0, 1].

Dans certains modes de réalisation, la mesure de performance est la « précision » d'une règle ou « le rappel » d'une règle ou « le F-score » de la règle, qui est une moyenne harmonique de la « précision » et du « rappel » de la règle.

Dans certains modes de réalisation, la sélection du sous-ensemble pertinent de règles pour contrôler chaque transaction gérée par le système de transaction consiste à choisir un sous-ensemble de règles avec la valeur de Shapley la plus élevée relativement à la mesure de performance de l'ensemble de règles entier.

Un des avantages du procédé d'évaluation des performances décrit dans la présente invention est qu'il permet de sélectionner le meilleur ensemble de règles pour le contrôle des transactions par le système de gestion, comme le montrera l'exemple suivant.

Par exemple, il a été considéré un ensemble de données composé de N= 355 613 observations correspondant à un ensemble de cas dans une détection de fraude par carte de crédit générée dans une ligne d'affaires spécifique où 286 règles sont en production. Chaque observation correspond à une transaction et ladite transaction est représentée par un vecteur (X; Y) de 287 valeurs binaires où $X \in \{0,1\}^{286}$ et $Y \in \{0,1\}$. Chaque variable $X_j$ dans le vecteur X avec $j \in [1, ..., 286]$ correspond à une règle et "1" (respectivement "0") signifie que la règle correspondante a (respectivement « n'a pas ») généré une alerte pour cette transaction. La variable binaire Y égale 1 si c'était une transaction frauduleuse (Y = 1). Dans notre ensemble de données, nous avons un total de 136 223 transactions frauduleuses. Les 286 règles sont agrégées par l'« opérateur OU ». Soit $\delta = max_j(X_j)$ la sortie du système de détection de fraude tel que si $\delta = 1$ alors, nous savons qu'une alerte a été produite sur cette transaction par le système de détection de fraude et $\delta = 0$ signifie qu'aucune alerte n'a été générée. Selon ces paramètres, il est possible de définir respectivement le nombre de vrai positif, de faux positif et de faux négatif comme suit :

$$N_{VP} = \sum_{i=1}^{N} I(Y_i = 1 \wedge \delta_i = 1) = 42210$$

$$N_{FP} = \sum_{i=1}^{N} I(Y_i = 0 \wedge \delta_i = 1) = 219390$$

$$N_{FN} = \sum_{i=1}^{N} I(Y_i = 1 \wedge \delta_i = 0) = 94013$$

où la fonction $I$ est la fonction indicatrice d'un événement qui prend la valeur 1 lorsque l'événement se produit et la valeur 0 lorsque l'événement ne se produit pas. L'opérateur "$\wedge$" correspond à l'opérateur logique "et".

A partir desdites définitions, les mesures de performance suivantes du dispositif de détection de fraude entier avec les 286 règles ont été calculées : précision $p$ = 0,16, rappel $r$ = 0,31, F-score $f$ = 0,21.

Comme des règles simples « si-alors (-sinon) » sont spécifiques pour un scénario de fraude donné, la plupart des règles sont conçues pour avoir individuellement une bonne précision mais ont tendance à avoir un rappel faible. En effet, un calcul de la précision moyenne et du rappel moyen respectivement des 286 précisions individuelles et rappels individuels est, respectivement $\bar{p}$ = 0: 29 et $\bar{r}$ = 0: 0016.

L'objectif est donc de garder une bonne précision et d'obtenir un bon rappel lorsque les 286 règles sont combinées avec l'« opérateur OU ».

Pour clarifier les choses, l'on doit clairement faire la distinction entre des mesures ou métriques utilisées pour classer les règles (trouver les règles les plus importantes) et des mesures ou métriques pour évaluer un ensemble de règles. Bien que dans l'approche traditionnelle, la même mesure - disons F-score - serait utilisée à la fois pour apprécier des règles individuelles et pour évaluer des ensembles de règles, ci-après nous les considérons comme des composants indépendants. Par conséquent, nous distinguons

- l'utilisation (en amont) d'une mesure ou métrique comme un critère de classement, qui nous permet d'extraire de l'ensemble de règles, stocké dans une mémoire du système de gestion, k règles classées en tête (une mesure utilisée comme un outil de création de classifieur) ;
- de l'utilisation (en aval) d'une mesure ou métrique comme une métrique d'évaluation pour le classifieur agrégé (une mesure utilisée comme un outil d'évaluation de classifieur) ;

Utilisons l'expression classifieur top-k (ou top-k, en abrégé) pour faire référence au classifieur obtenu en agrégeant dans « OU » l'ensemble de règles dans les k rangs les plus élevés selon un critère de classement donné. Fixons une mesure d'évaluation, disons le F-score du classifieur top-k. L'objectif est de trouver comment l'évaluation de règle traditionnelle, disons en utilisant le F-score individuel, se compare à l'évaluation correspondante, dans ce cas la Valeur de Shapley par rapport au F-score de l'ensemble de règles ou F-score global.

Pour la sélection du classifieur top-k, les paires de critères suivantes sont utilisées :

- F-score individuel (par exemple) versus Valeur de Shapley relativement au F-score de l'ensemble de règles (par exemple) ou F-score global ;
- précision individuelle (par exemple) versus Valeur de Shapley relativement à la précision de l'ensemble de règles (par exemple) ou précision globale;
- rappel individuel (par exemple) versus Valeur de Shapley relativement au rappel de l'ensemble de règles (par exemple) ou rappel global.

A partir de chaque paire de critères, nous obtenons la paire correspondante de classifieurs top-k et nous comparons ensuite les performances des deux éléments de la paire de classifieurs en utilisant comme une mesure d'évaluation :

- le F-score des deux classifieurs top-k ;
- la précision des deux classifieurs top-k ;
- le rappel des deux classifieurs top-k

Sur les Figures 2a, 2b et 2c, qui montrent la performance calculée du classifieur de top-k règles agrégées obtenu en utilisant comme mesure de classement de règle, le F-score individuel et la Valeur de Shapley par rapport au F-score de l'ensemble de règles, on peut observer que la performance du critère de classement basé sur la Valeur de Shapley (ligne avec des points noirs) est toujours remarquablement supérieure à celui traditionnel (ligne avec carré) dans le cas des mesures d'évaluation « précision des top-k règles » (Figure 2a) et « F-score des top-k règles » (Figure 2c), bien qu'elle soit inférieure, mais comparable dans le cas de la mesure d'évaluation «rappel des top-k règles »(Figure 2b). Cela est dû au fait que le classifieur top-k sélectionné par le critère basé sur la Valeur de Shapley par rapport au F-score de l'ensemble de règles est différent et plus efficace que celui sélectionné par le critère de F-score individuel. A noter que la majeure partie de la mesure de performance est obtenue en utilisant des valeurs de k inférieures à environ 50. Cela indique une réduction substantielle possible des règles opérationnelles, dans le cas où une réduction est nécessaire pour des raisons de gestion.

Si l'on choisit la deuxième paire de critères de classement, c.-à-d. précision individuelle versus Valeur de Shapley par rapport à la précision de l'ensemble de règles, on peut observer, comme le montrent les Figures 3a, 3b et 3c, que la performance du critère de classement basé sur la Valeur de Shapley est presque toujours remarquablement supérieur à celui traditionnel dans le cas de la mesure d'évaluation « F-score des top-k règles » (Figure 3c), et pour la première centaine de valeurs de k également pour le « rappel des top-k règles » (Figure 3b). Dans le cas de la mesure d'évaluation « précision des top-k règles » (Figure 3a), c'est l'approche traditionnelle qui l'emporte sur celle basée sur la valeur de Shapley.

Toutefois, l'inspection des données montre que les points de précision élevée correspondent à un rappel non pertinent ou négligeable. Ainsi, le F-score du classifieur top-k est le plus important critère d'évaluation ici, car il prend en compte la nécessité d'une bonne précision et d'un bon rappel pour le classifieur top-k.

Sur les Figures 4a, 4b et 4c montrant la comparaison entre la nouvelle approche d'évaluation décrite dans la présente invention et l'approche traditionnelle basée sur la troisième paire de critères de classement, on peut observer que la performance du critère de classement basé sur la Valeur de Shapley par rapport au rappel de l'ensemble de règles est toujours comparable à celle traditionnelle. En fait, par une inspection plus approfondie des classements de règle (non montrée explicitement ici), on peut observer que les deux mesures produisent des classements presque co-monotones pour les règles.

La présente demande décrit diverses caractéristiques techniques et avantages en référence aux figures et/ou à divers modes de réalisation.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

**Revendications**

1. Système pour gérer des transactions financières comprenant au moins une base de données (2) contenant des informations sur les transactions, au moins un dispositif de détection de fraude (1) comprenant un module d'évaluation de règles (1b), un module de sélection de règles (1c), lesdits modules (1b, 1c) étant connectés et chaque module étant un code exécutable sur un ordinateur, au moins une première mémoire (1a) pour stocker un ensemble de règles pour détecter des fraudes lors de chaque transaction connectée au module d'évaluation de règles (1b), dans ledit système le module d'évaluation de règles (1b) permet de calculer une estimation de la contribution de chaque règle de l'ensemble de règles relativement à un paramètre représentant la performance globale de l'ensemble de règles stocké dans la première mémoire (1a) du dispositif de détection (1), cette estimation de contribution comprenant le calcul d'une valeur de Shapley de chaque règle donnée et étant sauvegardée dans un fichier de rapport d'évaluation, et ledit fichier de rapport et lesdites règles évaluées étant transférés dans le module de sélection de règles (1c), ledit module de sélection (1c) analysant le rapport pour sélectionner un sous-ensemble de règles parmi les règles évaluées de l'ensemble de règles, lesdites règles sélectionnées étant stockées dans une seconde mémoire (1d) du dispositif de détection de fraude (1) et devant être utilisées pour le contrôle des transactions,

dans lequel le dispositif de détection de fraude (1) comprend un module de détection de fraude en temps réel TR (1e) pour le contrôle des transactions avant l'autorisation pour le paiement et un module de détection de fraude en temps quasi réel TQR (1f) pour le contrôle desdites transactions après l'autorisation, chacun desdits modules (1e, 1f) étant connecté à la seconde mémoire (1d) du dispositif de détection de fraude (1),

dans lequel le module de sélection de règles (1c) génère également un fichier de rapport de sélection transmis à la seconde mémoire (1d) du dispositif de détection (1), ledit rapport contenant une liste du sous-ensemble de règles sélectionné, chaque règle dudit sous-ensemble ayant une valeur de Shapley au-dessus d'un seuil de valeur de Shapley déterminé, pour le contrôle des transactions financières et un code représentant les actions à entreprendre concernant les règles non sélectionnées encore mémorisées dans la première mémoire (1a), lesdites actions comprenant au moins l'une des fonctionnalités suivantes : remplacer et/ou modifier et/ou supprimer les règles non sélectionnées de la première mémoire (1a) du dispositif de détection (1), le système comprenant au moins une première alarme (3a) et une seconde alarme (3b) pour produire une alerte lorsqu'au moins une des règles sélectionnées, stockées dans la seconde mémoire (1d) du dispositif de détection de fraude (1), est violée par les informations financières transmises par le dispositif de paiement au cours d'une transaction.

2. Système selon la revendication précédente, dans lequel le fichier de rapport d'évaluation généré par le module d'évaluation de règles (1b) contient chaque paramètre représentant la contribution de chaque règle, incluse dans la première mémoire (1a) du dispositif de détection (1), à la performance globale de l'ensemble de règles de ladite première mémoire (1a).

3. Système selon l'une des revendications précédentes, dans lequel le module de sélection de règles (1c) comprend au moins un agencement pour analyser automatiquement le fichier de rapport d'évaluation transmis par le module d'évaluation de règles (1b) et un agencement pour sélectionner automatiquement un sous-ensemble de règles en fonction d'au moins un critère lié au nombre de règles qu'un expert en détection de fraude souhaite conserver dans la seconde mémoire (1d), ladite sélection étant basée sur la valeur de Shapley (VS) de chaque règle relativement à une mesure de performance donnée, pour le contrôle de chaque transaction financière.

4. Système selon l'une des revendications précédentes, comprenant au moins une interface homme-machine (IHM) utilisée par un expert en détection de fraude pour analyser manuellement le fichier de rapport d'évaluation et sélectionner un sous-ensemble de règles en fonction d'au moins un critère lié au nombre de règles que ledit expert en détection de fraude souhaite conserver dans la seconde mémoire (1d), ladite sélection étant basée sur la valeur de Shapley (VS) de chaque règle relativement à une mesure de performance donnée, pour le contrôle de chaque transaction financière.

5. Système selon l'une des revendications précédentes, dans lequel les informations financières transmises lors de chaque transaction par un dispositif de paiement, d'une entité émettrice, utilisé par un titulaire de carte lors de chaque transaction, sont transférées de la base de données (2) au dispositif de détection (1), lesdites informations étant contrôlées par les règles sélectionnées de la seconde mémoire (1d) dudit dispositif de détection (1).

6. Système selon l'une des revendications précédentes, dans lequel les règles stockées dans la seconde mémoire (1d) du dispositif de détection (1) permettent à un système de transaction financière de gestion de générer une alerte lorsqu'une fraude est détectée au cours d'une transaction.

7. Système selon l'une des revendications précédentes, comprenant également au moins un module d'autorisation (4) connecté à la première alarme (3a) afin de délivrer ou non une autorisation pour le paiement selon qu'une alerte est émise ou non pendant le contrôle TR de la transaction par le module de détection de fraude TR (1e), un écran et un module à code exécutable par ordinateur pour préparer un affichage d'au moins les rapport d'évaluation et de sélection des règles de détection de fraude et/ou pour afficher un message d'alerte lorsqu'une fraude a été détectée lors d'une transaction pour permettre à un opérateur d'arrêter la transaction ou de la figer jusqu'à vérification.

8. Système selon l'une des revendications précédentes, dans lequel le module de détection de fraude TR (1e) est connecté à la première alarme (3a) et au module d'autorisation (4) du système de gestion, et le module de détection de fraude TQR (1f) est connecté à la seconde alarme (3b) et audit module d'autorisation (4), lesdites alarmes (3a, 3b) produisant ou non une alerte lorsqu'une fraude est détectée ou non au moins dans l'un desdits modules (1e, 1f) pendant le contrôle d'une transaction et ledit module d'autorisation (4) délivrant une autorisation pour le paiement selon qu'une alerte est émise ou non pendant le contrôle TR.

9. Système selon l'une des revendications précédentes, dans lequel le module de détection de fraude TR (1e) est connecté au module de détection TQR (1f) au moyen du module d'autorisation (4) afin de transmettre les données autorisées pour une autre vérification par ledit module de détection de fraude TQR (1f) avant de procéder au paiement, la carte de paiement du titulaire de carte étant bloquée par ledit module de détection de fraude TQR (1f) lorsqu'une alerte est émise par la seconde alarme (3b) pendant le contrôle TQR.

10. Procédé pour gérer des transactions financières dans un système financier contenant au moins une base de données (2) pour stocker un ensemble de données lié à des transactions et/ou des informations concernant la détection de fraudes, au moins une première mémoire (1a) pour stocker un ensemble de règles utilisé pour la détection de fraudes au cours d'une transaction, un moyen informatique comprenant au moins une mémoire pour le stockage d'au moins un algorithme, au moins un processeur pour l'exécution dudit algorithme afin de mettre en oeuvre ledit procédé comprenant les étapes:

• d'évaluation de la performance de chaque règle de l'ensemble de règles permettant de calculer une estimation de la contribution de chaque règle de l'ensemble de règles relativement à un paramètre représentant la performance globale de l'ensemble de règles stocké dans la première mémoire (1a), cette estimation de contribution comprenant le calcul d'une valeur de Shapley de chaque règle donnée et étant sauvegardée dans un fichier de rapport d'évaluation;
• de sélection d'un sous-ensemble pertinent de règles parmi l'ensemble de règles évalué pour le contrôle de chaque transaction, dans laquelle le rapport d'évaluation est analysé pour sélectionner un sous-ensemble de règles parmi les règles évaluées de l'ensemble de règles, lesdites règles sélectionnées étant stockées dans une seconde mémoire (1d) et devant être utilisées pour le contrôle des transactions,
• de remplacement et/ou modification et/ou suppression des règles non sélectionnées de la mémoire du système de transaction ; l'évaluation de la performance d'une règle étant basée sur une estimation de sa contribution relativement à la performance globale de l'ensemble de règles utilisé pour contrôler une transaction donnée,

le procédé comprenant les étapes :

• de détection de fraude en temps réel TR (1e) pour le contrôle des transactions avant l'autorisation pour le paiement,
• de détection de fraude en temps quasi réel TQR (1f) pour le contrôle desdites transactions après l'autorisation,
• de produire une alerte par une première alarme (3a) et une seconde alarme (3b) lorsqu'au moins une des règles sélectionnées, stockées dans la seconde mémoire (1d), est violée par les informations financières transmises par le dispositif de paiement au cours d'une transaction,

dans lequel l'étape de sélection génère également un fichier de rapport de sélection transmis à la seconde mémoire (1d), ledit rapport de sélection contenant une liste du sous-ensemble de règles sélectionné, chaque règle dudit sous-ensemble ayant une valeur de Shapley au-dessus d'un seuil de valeur de Shapley déterminé, pour le contrôle des transactions financières et un code représentant les actions à entreprendre concernant les règles non sélectionnées encore mémorisées, lesdites actions étant mise en oeuvre par les étapes de remplacement et/ou modification et/ou suppression des règles non sélectionnées.

11. Procédé selon la revendication précédente, dans lequel l'évaluation de la contribution de chaque règle à la performance globale de l'ensemble de règles comprend la construction d'une pluralité de sous-ensembles de règles comprenant ladite règle, au moyen d'un algorithme d'échantillonnage permettant un échantillonnage aléatoire, de l'ensemble de règles entier stocké dans la mémoire (1a) du système financier.

12. Procédé selon l'une des deux revendications précédentes, dans lequel l'estimation de la contribution de chaque règle, à la performance globale de l'ensemble de règles entier, comprend le calcul d'une valeur de Shapley de ladite règle donnée par une moyenne, sur la pluralité de sous-ensembles de règles construite, d'une « contribution marginale » de ladite règle à la performance de chacun des sous-ensembles de règles relativement à une mesure de performance donnée.

13. Procédé selon la revendication 10 dans lequel la mesure de performance est la « précision » d'une règle ou « le rappel » d'une règle ou « le F-score » de la règle, qui est une moyenne harmonique de la « précision » et du « rappel » de la règle.

14. Procédé selon l'une des quatre revendications précédentes, dans lequel la sélection du sous-ensemble pertinent de règles pour contrôler chaque transaction gérée par le système de transaction consiste à choisir un sous-ensemble de règles avec la valeur de Shapley la plus élevée relativement à la mesure de performance de l'ensemble de règles entier.

**Patentansprüche**

1. System zum Verwalten von Finanztransaktionen, umfassend mindestens eine Datenbank (2), die Informationen über die Transaktionen enthält, mindestens eine Betrugserkennungsvorrichtung (1), umfassend ein Regelauswertungsmodul (1b), ein Regelauswahlmodul (1c), wobei die Module (1b, 1c) verbunden sind und jedes Modul ein auf einem Computer ausführbarer Code ist, mindestens einen ersten Speicher (1a) zum Speichern eines Regelsatzes zum Erkennen von Betrug bei jeder Transaktion, die mit dem Regelauswertungsmodul (1b) verbunden ist, wobei in dem System das Regelauswertungsmodul (1b) ein Berechnen einer Beitragsschätzung jeder Regel des Regelsatzes in Bezug auf einen Parameter ermöglicht, der die Gesamtwirksamkeit des Regelsatzes abbildet, der in dem ersten Speicher (1a) der Erkennungsvorrichtung (1) gespeichert ist, diese Beitragsschätzung umfassend die Berechnung eines Shapley-Werts jeder gegebenen Regel, und die in einer Bewertungsberichtsdatei gespeichert wird, und wobei die Berichtsdatei und die ausgewerteten Regeln in das Regelauswahlmodul (1c) übertragen werden, wobei das Auswahlmodul (1c) den Bericht analysiert, um einen Regeluntersatz unter den ausgewerteten Regeln des Regelsatzes auszuwählen, wobei die ausgewählten Regeln in einem zweiten Speicher (1d) der Betrugserkennungsvorrichtung (1) gespeichert werden und für die Prüfung von Transaktionen verwendet werden müssen, wobei die Betrugserkennungsvorrichtung (1) ein Echtzeit-Betrugserkennungsmodul TR (1e) für die Prüfung von Transaktionen vor der Autorisierung für die Zahlung und ein Quasi-Echtzeit-Betrugserkennungsmodul TQR (1f) für die Prüfung der Transaktionen nach der Autorisierung umfasst, wobei jedes der Module (1e, 1f) mit dem zweiten Speicher (1d) der Betrugserkennungsvorrichtung (1) verbunden ist, wobei das Regelauswahlmodul (1c) ferner eine Auswahlberichtsdatei erzeugt, die an den zweiten Speicher (1d) der Erkennungsvorrichtung (1) übertragen wird, wobei der Bericht eine Liste des ausgewählten Regeluntersatzes enthält, wobei jede Regel des Untersatzes einen Shapley-Wert über einem bestimmten Shapley-Wert-Schwellenwert für die Prüfung von Finanztransaktionen und einen Code aufweist, der die Aktionen abbildet, die bezüglich der nicht ausgewählten Regeln, die noch in dem ersten Speicher (1a) gespeichert sind, vorzunehmen sind,

die Aktionen umfassend mindestens eine der folgenden Funktionalitäten: Ersetzen und/oder Modifizieren und/oder Löschen der nicht ausgewählten Regeln aus dem ersten Speicher (1a) der Erkennungsvorrichtung (1), das System umfassend mindestens einen ersten Alarm (3a) und einen zweiten Alarm (3b), um eine Warnmeldung zu verursachen, wenn mindestens eine der ausgewählten Regeln, die in dem zweiten Speicher (1d) der Betrugserkennungsvorrichtung (1) gespeichert sind, durch die Finanzinformationen, die durch die Zahlungsvorrichtung im Laufe einer Transaktion übertragen werden, verletzt wird.

2. System nach dem vorstehenden Anspruch, wobei die Bewertungsberichtsdatei, die durch das Regelauswertungsmodul (1b) erzeugt wird, jeden Parameter enthält, der den Beitrag jeder Regel, die in dem ersten Speicher (1a) der Erkennungsvorrichtung (1) eingeschlossen ist, zu der Gesamtwirksamkeit des Regelsatzes des ersten Speichers (1a) abbildet.

3. System nach einem der vorstehenden Ansprüche, wobei das Regelauswahlmodul (1c) mindestens eine Anordnung zum automatischen Analysieren der Bewertungsberichtsdatei, die durch das Regelauswertungsmodul (1b) übertragen wird, und eine Anordnung zum automatischen Auswählen eines Reguntersatzes in Abhängigkeit von mindestens einem Kriterium, das mit der Anzahl der Regeln verknüpft ist, die ein Betrugserkennungsexperte in dem zweiten Speicher (1d) behalten möchte, umfasst, wobei die Auswahl auf dem Shapley-Wert (VS) jeder Regel in Bezug auf eine gegebene Wirksamkeitsmessung für die Prüfung jeder Finanztransaktion basiert.

4. System nach einem der vorstehenden Ansprüche, umfassend mindestens eine Mensch-Maschine-Schnittstelle (MMS), die durch einen Betrugserkennungsexperten zum manuellen Analysieren der Bewertungsberichtsdatei und Auswählen eines Reguntersatzes, in Abhängigkeit von mindestens einem Kriterium, das mit der Anzahl der Regeln verknüpft ist, die der Betrugserkennungsexperte in dem zweiten Speicher (1d) behalten möchte, verwendet wird, wobei die Auswahl auf dem Shapley-Wert (VS) jeder Regel in Bezug auf eine gegebenen Wirksamkeitsmessung für die Prüfung jeder Finanztransaktion basiert.

5. System nach einem der vorstehenden Ansprüche, wobei die Finanzinformationen, die bei jeder Transaktion durch eine Zahlungsvorrichtung einer ausstellenden Einheit übertragen werden, die durch einen Karteninhaber bei jeder Transaktion verwendet wird, von der Datenbank (2) an die Erkennungsvorrichtung (1) übertragen werden, wobei die Informationen durch die ausgewählten Regeln des zweiten Speichers (1d) der Erkennungsvorrichtung (1) geprüft werden.

6. System nach einem der vorstehenden Ansprüche, wobei die Regeln, die in dem zweiten Speicher (1d) der Erkennungsvorrichtung (1) gespeichert sind, es einem Verwaltungsfinanztransaktionssystem ermöglichen, eine Warnmeldung zu erzeugen, wenn im Laufe einer Transaktion ein Betrug erkannt wird.

7. System nach einem der vorstehenden Ansprüche, ferner umfassend mindestens ein Autorisierungsmodul (4), das mit dem ersten Alarm (3a) verbunden ist, um eine Autorisierung für die Zahlung zu erteilen oder nicht, je nachdem, ob während der TR-Prüfung der Transaktion durch das TR-Betrugserkennungsmodul (1e) ein Alarm ausgegeben wird oder nicht, einen Bildschirm und ein Modul mit computerausführbarem Code zum Vorbereiten einer Anzeige von mindestens den Bewertungs- und Auswahlberichten der Betrugserkennungsregeln und/oder zum Anzeigen eines Warnhinweises, wenn bei einer Transaktion ein Betrug erkannt wurde, um einem Bediener zu ermöglichen, die Transaktion zu stoppen oder sie bis zu einer Verifizierung einzufrieren.

8. System nach einem der vorstehenden Ansprüche, wobei das TR-Betrugserkennungsmodul (1e) mit dem ersten Alarm (3a) und mit dem Autorisierungsmodul (4) des Verwaltungssystems verbunden ist, und das TQR-Betrugserkennungsmodul (1f) mit dem zweiten Alarm (3b) und mit dem Autorisierungsmodul (4) verbunden ist, wobei die Alarme (3a, 3b) eine Warnmeldung verursachen oder nicht, wenn ein Betrug in mindestens einem der Module (1e, 1f) während der Prüfung einer Transaktion erkannt wird oder nicht, und das Autorisierungsmodul (4) eine Autorisierung für die Zahlung ausstellt, je nachdem, ob während der TR-Prüfung eine Warnmeldung ausgegeben wird oder nicht.

9. System nach einem der vorstehenden Ansprüche, wobei das TR-Betrugserkennungsmodul (1e) mit dem TQR-Erkennungsmodul (1f) mittels des Autorisierungsmoduls (4) verbunden ist, um die autorisierten Daten für eine weitere Verifizierung durch das TQR-Betrugserkennungsmodul (1f) zu übertragen, bevor die Zahlung durchgeführt wird, wobei die Zahlungskarte des Karteninhabers durch das TQR-Betrugserkennungsmodul (1f) gesperrt wird, wenn während der TQR-Prüfung eine Warnmeldung durch den zweiten Alarm (3b) ausgegeben wird.

10. Verfahren zum Verwalten von Finanztransaktionen in einem Finanzsystem, das mindestens eine Datenbank (2) zum Speichern eines mit Transaktionen verknüpften Datensatzes und/oder von Informationen bezüglich der Betrugserkennung, mindestens einen ersten Speicher (1a) zum Speichern eines Regelsatzes, der für die Betrugserkennung im Laufe einer Transaktion verwendet wird, ein Computermittel, umfassend mindestens einen Speicher zum Speichern mindestens eines Algorithmus, mindestens einen Prozessor für die Ausführung des Algorithmus enthält, um das Verfahren operativ umzusetzen, umfassend die Schritte:

   • eines Bewertens der Leistung jeder Regel des Regelsatzes, um eine Beitragsschätzung jeder Regel des Regelsatzes in Bezug auf einen Parameter zu berechnen, der die Gesamtwirksamkeit des Regelsatzes abbildet, der in dem ersten Speicher (1a) gespeichert ist, diese Beitragsschätzung umfassend die Berechnung eines Shapley-Werts jeder gegebenen Regel, und die in einer Bewertungsberichtsdatei gespeichert wird;

• eines Auswählens eines zutreffenden Regeluntersatzes unter dem ausgewerteten Regelsatz für die Prüfung jeder Transaktion, wobei der Bewertungsbericht zum Auswählen eines Regeluntersatzes unter den ausgewerteten Regeln des Regelsatzes analysiert wird, wobei die ausgewählten Regeln in einem zweiten Speicher (1d) gespeichert werden und für die Prüfung der Transaktionen verwendet werden müssen,

• eines Ersetzens und/oder Modifizierens und/oder Löschens der nicht ausgewählten Regeln aus dem Speicher des Transaktionssystems;

wobei das Bewerten der Wirksamkeit einer Regel auf einer Schätzung ihres Beitrags in Bezug auf die Gesamtwirksamkeit des Regelsatzes basiert ist, der zum Prüfen einer gegebenen Transaktion verwendet wird, das Verfahren umfassend die Schritte:

• des Erkennens eines Betrugs in Echtzeit TR (1e) für die Prüfung von Transaktionen vor der Autorisierung für die Zahlung,
• des Erkennens eines Betrugs in Quasi-Echtzeit TQR (1e) für die Prüfung der Transaktionen nach der Autorisierung,
• Verursachen einer Warnmeldung durch einen ersten Alarm (3a) und einen zweiten Alarm (3b), wenn mindestens eine der ausgewählten Regeln, die in dem zweiten Speicher (1d) gespeichert sind, durch die Finanzinformationen, die durch die Zahlungsvorrichtung im Laufe einer Transaktion übertragen werden, verletzt wird,

wobei der Schritt des Auswählens ferner eine Auswahlberichtsdatei erzeugt, die an den zweiten Speicher (1d) übertragen wird, wobei der Auswahlbericht eine Liste eines ausgewählten Regeluntersatzes enthält, wobei jede Regel des Regeluntersatzes einen Shapley-Wert über einem bestimmten Shapley-Wert-Schwellenwert für die Prüfung von Finanztransaktionen und einen Code, der die Aktionen abbildet, die bezüglich der noch gespeicherten nicht ausgewählten Regeln vorzunehmen sind, aufweist, wobei die Aktionen durch die Schritte des Ersetzens und/oder des Modifizierens und/oder des Löschens der nicht ausgewählten Regeln operativ umgesetzt werden.

11. Verfahren nach dem vorstehenden Anspruch, wobei das Beitragsauswerten jeder Regel zu der Gesamtwirksamkeit des Regelsatzes die Ausarbeitung einer Vielzahl von Regeluntersätzen umfasst, umfassend die Regel, mittels eines Stichprobenalgorithmus, der eine Zufallsstichprobe des gesamten Regelsatzes, der in dem Speicher (1a) des Finanzsystems gespeichert ist, ermöglicht.

12. Verfahren nach einem der zwei vorstehenden Ansprüche, wobei das Beitragsschätzen jeder Regel zu der Gesamtwirksamkeit des gesamten Regelsatzes die Berechnung eines Shapley-Werts der Regel umfasst, der durch einen Mittelwert aus der Vielzahl von Regeluntersätzen gegeben ist, der als ein "Grenzbeitrag" der Regel zu der Wirksamkeit jedes Regeluntersatzes in Bezug auf eine gegebene Wirksamkeitsmessung ausgearbeitet wird.

13. Verfahren nach Anspruch 10, wobei das Wirksamkeitsmessen die "Genauigkeit" einer Regel oder die "Rückstellung" einer Regel oder der "F-Score" der Regel ist, der ein harmonischer Mittelwert aus der "Genauigkeit" und dem "Rückstellung" der Regel ist.

14. Verfahren nach einem der vier vorstehenden Ansprüche, wobei das Auswählen des zutreffenden Regeluntersatzes zum Steuern jeder Transaktion, die durch das Transaktionssystem verwaltet wird, darin besteht, dass ein Regeluntersatz mit dem höchsten Shapley-Wert in Bezug auf die Wirksamkeitsmessung des gesamten Regelsatzes ausgewählt wird.

**Claims**

1. A system for managing financial transactions comprising at least one database (2) containing information on the transactions, at least one fraud detection device (1) comprising a rule evaluation module (1b) and a rule selection module (1c), said modules (1b, 1c) being connected and each module being a code which is executable on a computer, at least one first memory (1a) for storing a set of rules for detecting fraud during each transaction, which memory is connected to the rule evaluation module (1b), in said system the rule evaluation module (1b) makes it possible to estimate the contribution of each rule of the set of rules relative to a parameter representing the overall performance of the set of rules stored in the first memory (1a) of the detection device (1), this contribution estimation comprising the calculation of a Shapley value for each given rule and being saved in an evaluation report file, and said report file and said evaluated rules being transferred to the rule selection module (1c), said selection module (1c) analyzing the report in order to select a subset of rules from the evaluated rules of the set of rules, said selected rules being stored in a second memory (1d) of the fraud detection device (1) and having to be used for verifying the transactions, wherein the fraud detection device (1) comprises a real-time RT fraud detection module (1e) for verifying the transactions before the payment authorization and a near-real-time NRT fraud detection module (1f) for verifying said transactions after authorization, each of said modules (1e, 1f) being connected to the second memory (1d) of the fraud detection device (1), wherein the rule selection module (1c) also generates a selection report file which is transmitted to the second memory (1d) of the detection device (1), said report containing a list of the selected subset of rules, each rule of said subset having a Shapley value greater than a determined Shapley value threshold, for verifying the financial transactions, and a code representing the actions to be taken with respect to the non-selected rules which are still stored in the first memory (1a),

said actions comprising at least one of the following functionalities: replacing and/or modifying and/or deleting the non-selected rules of the first memory (1a) of the detection device (1), the system comprising at least one first alarm (3a) and one second alarm (3b) for producing an alert when at least one of the selected rules which are stored in the second memory (1d) of the fraud detection device (1) is broken by the financial information transmitted by the payment device during a transaction.

2. The system according to the preceding claim, wherein the evaluation report file generated by the rule evaluation module (1b) contains each parameter representing the contribution of each rule, included in the first memory (1a) of the detection device (1), toward the overall performance of the set of rules of said first memory (1a).

3. The system according to any of the preceding claims, wherein the rule selection module (1c) comprises at least one arrangement for automatically analyzing the evaluation report file transmitted by the rule evaluation module (1b) and one arrangement for automatically selecting a subset of rules on the basis of at least one criterion linked to the number of rules that a fraud detection expert wishes to store in the second memory (1d), said selection being based on the Shapley value (VS) of each rule relative to a given performance measure, for verifying each financial transaction.

4. The system according to any of the preceding claims, comprising at least one human-machine interface (IHM) used by a fraud detection expert to manually analyze the evaluation report file and to select a subset of rules on the basis of at least one criterion linked to the number of rules that said fraud detection expert wishes to store in the second memory (1d), said selection being based on the Shapley value (VS) of each rule relative to a given performance measure, for verifying each financial transaction.

5. The system according to any of the preceding claims, wherein the financial information transmitted during each transaction by a payment device, from an issuing entity, used by a cardholder during each transaction, is transferred from the database (2) to the detection device (1), said information being verified by the selected rules of the second memory (1d) of said detection device (1).

6. The system according to any of the preceding claims, wherein the rules stored in the second memory (1d) of the detection device (1) enable a financial transaction management system to generate an alert when fraud is detected during a transaction.

7. The system according to any of the preceding claims, further comprising at least one authorization module (4) connected to the first alarm (3a) in order to issue a payment authorization or not according to whether or not an alert is issued during RT verification of the transaction by the RT fraud detection module (1e), a screen and a computer-executable code module for preparing a display of at least the reports for evaluation and selection of the fraud detection rules and/or for displaying an alert message when fraud has been detected during a transaction so as to enable an operator to stop the transaction or to freeze the transaction until it has been verified.

8. The system according to any of the preceding claims, wherein the RT fraud detection module (1e) is connected to the first alarm (3a) and to the authorization module (4) of the management system, and the NRT fraud detection module (1f) is connected to the second alarm (3b) and to said authorization module (4), said alarms (3a, 3b) producing or not producing an alert when fraud is detected or not detected at least in one of said modules (1e, 1f) during verification of a transaction and said authorization module (4) issuing a payment authorization according to whether or not an alert is emitted during RT verification.

9. The system according to any of the preceding claims, wherein the RT fraud detection module (1e) is connected to the NRT detection module (1f) by means of the authorization module (4) in order to transmit the authorized data for further verification by said NRT fraud detection module (1f) before proceeding with payment, the cardholder's payment card being blocked by said NRT fraud detection module (1f) when an alert is emitted by the second alarm (3b) during NRT verification.

10. A method for managing financial transactions in a financial system containing at least one database (2) for storing a dataset linked to transactions and/or information relating to fraud detection, at least one first memory (1a) for storing a set of rules used for fraud detection during a transaction, a computing means comprising at least one memory for storing at least one algorithm, and at least one processor for executing said algorithm in order to implement said method; the method comprising the following steps:

• evaluating the performance of each rule of the set of rules, which makes it possible to estimate the contribution of each rule of the set of rules relative to a parameter representing the overall performance of the set of rules stored in the first memory (1a), this contribution estimation comprising the calculation of a Shapley value for each given rule and being saved in an evaluation report file;
• selecting a relevant subset of rules from the evaluated set of rules for verifying each transaction, wherein the evaluation report is analyzed in order to select a subset of rules from the evaluated rules of the set of rules, said selected rules being stored in a second memory (1d) and having to be used for verifying the transactions,
• replacing and/or modifying and/or deleting the non-selected rules of the memory of the transaction system;

the evaluation of the performance of a rule being based on an estimation of its contribution relative to the overall performance of the set of rules used for verifying a given transaction,
the method comprising the following steps:

• real-time RT fraud detection (1e) for verifying transactions before the payment authorization,
• near-real-time NRT fraud detection (1f) for verifying said transactions after authorization,
• producing an alert via a first alarm (3a) and a second alarm (3b) when at least one of the selected rules, stored in the second memory (1d), is broken by the financial information transmitted by the payment device during a transaction,

wherein the selection step also generates a selection report file transmitted to the second memory (1d), said selection report containing a list of the selected subset of rules, each rule of said subset having a Shapley valuegreater than a determined Shapley value threshold, for verifying the financial transactions, and a code representing the actions to be taken in relation to the non-selected rules which are still stored, said actions being implemented by the steps of replacing and/or modifying and/or deleting the non-selected rules.

11. The method according to the preceding claim, wherein the evaluation of the contribution of each rule toward the overall performance of the set of rules comprises constructing a plurality of subsets of rules comprising said rule, by means of a sampling algorithm enabling random sampling, from the entire set of rules stored in the memory (1a) of the financial system.

12. The method according to either of the two preceding claims, wherein the estimation of the contribution of each rule toward the overall performance of the entire set of rules comprises calculating a Shapley value of said rule given by a mean, over the plurality of constructed subsets of rules, of a "marginal contribution" of said rule toward the performance of each of the subsets of rules relative to a given performance measure.

13. The method according to claim 10, wherein the performance measure is the "precision" of a rule or "the recall" of a rule or "the F-score" of the rule, which is a harmonic mean of the "precision" and the "recall" of the rule.

14. The method according to any of the four preceding claims, wherein the selection of the relevant subset of rules for verifying each transaction managed by the transaction system consists in selecting a subset of rules with the highest Shapley value relative to the performance measure of the entire set of rules.

**Figure 1**

**Figure 2a**

**Figure 2b**

**Figure 2c**

**Figure 3a**

**Figure 3b**

**Figure 3c**

**Figure 4a**

**Figure 4b**

**Figure 4c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011276489 A1